(19) Europäisches Patentamt
European Patent Office
Office européen des brevets

(11) **EP 4 629 308 A1**

(12) **EUROPEAN PATENT APPLICATION**
published in accordance with Art. 153(4) EPC

(43) Date of publication:
**08.10.2025 Bulletin 2025/41**

(21) Application number: **23897092.5**

(22) Date of filing: **24.04.2023**

(51) International Patent Classification (IPC):
**H01M 4/13** *(2010.01)*    **H01M 4/36** *(2006.01)*
**H01M 4/58** *(2010.01)*    **H01M 4/60** *(2006.01)*
**H01M 4/70** *(2006.01)*    **H01M 10/052** *(2010.01)*
**H01M 10/058** *(2010.01)*

(52) Cooperative Patent Classification (CPC):
**H01M 4/13; H01M 4/136; H01M 4/1399;
H01M 4/36; H01M 4/58; H01M 4/60; H01M 4/70;
H01M 10/052; H01M 10/0564;** H01M 10/058;
Y02E 60/10

(86) International application number:
**PCT/JP2023/016183**

(87) International publication number:
**WO 2024/116431 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.12.2022 JP 2022193139**

(71) Applicant: **SUMITOMO RUBBER INDUSTRIES,
LTD.
Kobe-shi, Hyogo 651-0072 (JP)**

(72) Inventors:
• **Chujo, Fumiya
Kobe-shi, Hyogo 651-0072 (JP)**
• **Kubo, Tatsuya
Kobe-shi, Hyogo 651-0072 (JP)**

(74) Representative: **TBK
Bavariaring 4-6
80336 München (DE)**

(54) **ELECTRODE AND LITHIUM-ION SECONDARY BATTERY**

(57)    Provided is an electrode for lithium-ion secondary battery, the electrode comprising an active material layer comprising a particulate active material, the active material comprising an organic sulfur compound and an iron compound, wherein $A_s$, $A_F$, and $D$ satisfy the following inequality (1) $A_s \times A_F \times D > 7000$, where $A_s$ represents a sulfur element content, in % by mass, in the active material, $A_F$ represents an iron element content, in % by mass, in the active material, and $D$ represents an application density, in $mg/cm^2$, of the active material.. It is an object of the present invention to improve an overall performance of charge and discharge capacity, a capacity retention rate, and energy density of a lithium-ion secondary battery.

**Description**

TECHNICAL FIELD

The present invention relates to a novel electrode and a lithium-ion secondary battery comprising the electrode.

BACKGROUND ART

The lithium-ion secondary battery has been mainly used as a battery for portable electronic device because of its large charge and discharge capacity. In addition, the lithium-ion secondary battery has been used more and more as a battery for electric vehicle as well, and expected to have improved performance.
Patent Document 1 describes that an active material is used for an electrode, which is obtained by baking a raw material comprising a polymer, which comprises methacrylonitrile as a monomer component, and sulfur.
Moreover, as negative electrode active materials, it has been proposed to use materials that can absorb and release more lithium ions, such as silicon (Si), tin (Sn), and the like in order to increase battery capacity of a lithium-ion secondary battery.

PRIOR ART DOCUMENT

Patent Document

Patent Document 1: JP 2020-167144 A

SUMMARY OF THE INVENTION

PROBLEM TO BE SOLVED BY THE INVENTION

However, there is further room for improvement in electrodes for which an active material as in Patent Document 1 is used.
It is an object of the present invention to provide an electrode, i.e., a positive electrode or a negative electrode, that can realize a lithium-ion battery with a high overall performance of charge and discharge capacity, a capacity retention rate, and energy density, and a lithium-ion secondary battery comprising the electrode.

MEANS TO SOLVE THE PROBLEM

That is, the present invention relates to the following electrode.
An electrode for lithium-ion secondary battery,

the electrode comprising an active material layer comprising a particulate active material,
the active material comprising an organic sulfur compound and an iron compound,
wherein $A_s$, $A_F$, and D satisfy the following inequality (1),

$$(1)\ A_s \times A_F \times D > 7000,$$

where $A_s$ represents a sulfur element content, in % by mass, in the active material, $A_F$ represents an iron element content, in % by mass, in the active material, and D represents an application density, in mg/cm$^2$, of the active material.

EFFECT OF THE INVENTION

According to the present invention, it is possible to provide an electrode, i.e., a positive electrode or a negative electrode, that can realize a lithium-ion battery with a high overall performance of charge and discharge capacity, a capacity retention rate, and energy density, and a lithium-ion secondary battery comprising the electrode.

BRIEF DESCRIPTION OF THE DRAWINGS

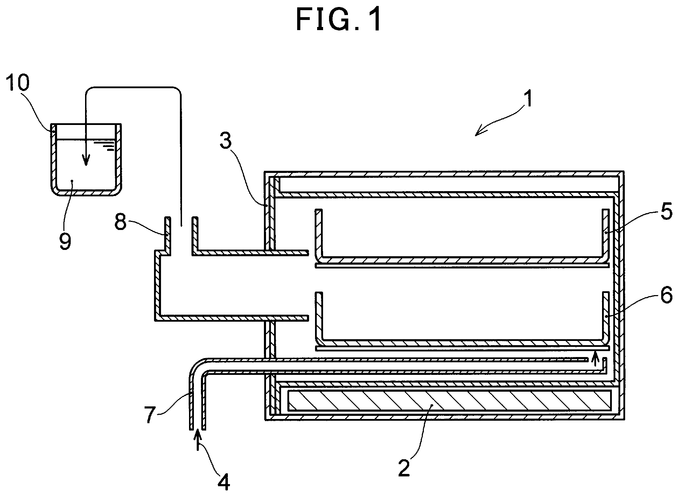

FIG. 1 is a cross-sectional view schematically showing a reaction device used for producing an active material in Examples of the present invention.

EMBODIMENT FOR CARRYING OUT THE INVENTION

The present invention will be described in detail as follows. Besides, numerical values of upper limits and lower limits relating to "or more" and "or less" for descriptions of numerical ranges are numerical values that can be arbitrarily combined, and numerical values in Examples can also be these upper limits and lower limits. Moreover, a numerical range shown to include values of its both ends is interpreted as also disclosing a numerical range not including one value of the values of its both ends, and a numerical range including none of the values of its both ends, unless contrary to the purpose of the present invention.

One embodiment of the present invention is the following electrode.
An electrode for lithium-ion secondary battery,

> the electrode comprising an active material layer comprising a particulate active material,
> the active material comprising an organic sulfur compound and an iron compound,
> wherein $A_s$, $A_F$, and D satisfy the following inequality (1),

$$(1)\ A_s \times A_F \times D > 7000,$$

> where $A_s$ represents a sulfur element content, in % by mass, in the active material, $A_F$ represents an iron element content, in % by mass in the active material, and D represents an application density, in mg/cm$^2$, of the active material.

Although it is not intended to be bound by a theory, the reason why the electrode of the present invention can be made to improve in overall performance of charge and discharge capacity, a capacity retention rate, and energy density is considered as follows.

Sulfur together with lithium easily produces a soluble compound during charge and discharge, and therefore, there is a drawback in that repetition of charge and discharge causes gradual deterioration of charge and discharge capacity. In contrast, the present invention is characterized in that an active material contains iron, and in addition, a product of a content ratio of sulfur in the active material, a content ratio of iron in the active material, and an application density, in mg/cm$^2$, of the active material, is kept equal to or greater than a certain value. Under such a condition, sulfur and iron held on an electrode affect each other under the given condition, whereby it is considered that the overall performance of charge and discharge capacity, a capacity retention rate, and energy density can be improved.

A value on the right side of the inequality (1) is preferably 8000.

The $A_S$ (sulfur element content in the active material) is preferably greater than 65.0% by mass.

The $A_F$ (iron element content in the active material) is preferably greater than 15.0% by mass.

The D (application density of the active material) is preferably greater than 2.5 mg/cm$^2$.

When an initial discharge capacity, in mAh/g, in a case where the above-described electrode is used as a positive electrode is referred to as $DC_3$, $DC_3$ is preferably greater than 400 mAh/g, more preferably greater than 600 mAh/g.

The above-described electrode comprises a current collector, the current collector comprises metal foil, and when a thickness, in $\mu$m, of the metal foil is referred to as T, $A_S$, D, and T preferably satisfy the following inequality (2),

$$(2)\ A_S \times D/T > 24.0.$$

In such a way that a quotient obtained by dividing a value of the product of the amount of sulfur and the application density by a value of the thickness of the current collector of the metal foil becomes equal to or greater than a certain value, the respective values are controlled with each other, so that it is considered that the performance of the electrode and/or a battery is improved.

When 10th discharge capacity, in mAh/g, in a case where the above-described electrode is used as a positive electrode is referred to as $DC_{10}$, $DC_{10}$ is preferably greater than 350 mAh/g.

Another embodiment of the present invention is a lithium-ion secondary battery comprising the above-described electrode.

It is preferable that the lithium-ion secondary battery further comprises an electrolyte, and when a volume, in mL, of the electrolyte is referred to as V, $A_S$, D, and V satisfy the following inequality (3),

$$(3)\ A_S \times D/V > 240.$$

In such a way that a quotient obtained by dividing a value of the product of the amount of sulfur and the application density by a value of the volume of the electrolyte becomes equal to or greater than a certain value, the respective values are controlled with each other, so that it is considered that the performance of the electrode and/or the battery is improved.

<Definition>

The term "particulate" means a state where an active material has been made fine enough to be suitable for mixing with another material for the purpose of the present invention. Regarding a particle that constitutes the active material, a size of such particle is not particularly limited as long as the size is such that the mixing can be appropriately performed.

An "active material" refers to a material that plays a role in oxidation-reduction reaction performed for energy conversion in a lithium-ion secondary battery.

An "active material layer" refers to a layer that is formed on a current collector constituting an electrode and that is made of an electrode material including an active material.

An "application density" refers to a mass, in mg, per unit area, in $cm^2$, of an active material applied on a current collector.

An "initial discharge capacity" refers to 3rd discharge capacity in the present specification, unless otherwise noted.

<Measuring method>

A "sulfur element content" is a mass ratio, in %, of a sulfur element in an active material and is measured by a method of elemental analysis described below in the present specification.

An "iron element content" is a mass ratio, in %, of an iron element in an active material and is measured by a method using thermogravimetry described below in the present specification.

A "median diameter" is a volume basis cumulative 50% size (median diameter d50) measured using water as a dispersion medium with a laser diffraction/scattering type particle size distribution analyzer (particle size distribution analyzer PSA1090L manufactured by Anton Paar GmbH).

The electrode for lithium-ion secondary battery of the present invention and the lithium-ion secondary battery of the present invention will be described below.

<Electrode for lithium-ion secondary battery>

The electrode for lithium-ion secondary battery of the present invention comprises an active material layer comprising a particulate active material, and the active material comprises an organic sulfur compound and an iron compound, and wherein $A_s$, $A_F$, and D satisfy the following inequality (1),

$$(1)\ A_s \times A_F \times D > 7000,$$

where $A_s$ represents a sulfur element content, in % by mass, in the active material, $A_F$ represents an iron element content, in % by mass, in the active material, and D represents an application density, in $mg/cm^2$, of the active material.

[Active material layer]

The active material layer relating to the present invention comprises a particulate active material. The active material layer is composed of an electrode material comprising a particulate active material, which is described below (that is, a material for positive electrode or a material for negative electrode). Here, the phrase, "an active material is particulate", means a state where an active material has been made fine enough to be suitable for mixing with another material constituting an electrode for the purpose of the present invention, and the meaning of the phrase is intended to be not particularly limited as long as the active material is in such a state. For example, when the term "particulate" is expressed by a median diameter, it can have a range of 1 nm to 1000 $\mu$m.

The median diameter of the particle constituting the active material (median diameter d50) is preferably about 1.0 $\mu$m or more and 40.0 $\mu$m or less. The median diameter is more preferably 1.5 $\mu$m or more, further preferably 2.0 $\mu$m or more, further preferably 2.4 $\mu$m or more. Moreover, the median diameter is more preferably 30.0 $\mu$m or less, further preferably 25.0 $\mu$m or less, further preferably 20.0 $\mu$m or less, further preferably 15.0 $\mu$m or less. The median diameter can be measured by a method described in Examples section below.

[Active material]

The active material relating to the present invention comprises an organic sulfur compound and an iron compound.

The organic sulfur compound is a compound in which at least a carbon atom, a hydrogen atom, and a sulfur atom bind to one another. Since the active material is obtained via a step of baking a raw material containing a polymer such as a rubber, a resin, and the like, an iron ion-containing compound, and sulfur, analysis of a detailed structure of a product resulting from the step is difficult, but it is confirmed that the carbon atom, the hydrogen atom, and the sulfur atom bind to one another. Under such a condition, it is presumed that the organic sulfur compound contains a carbon-sulfur structure body, for example, such as a long chain polymer-like thienoacene structure in which thiophene rings are subjected to condensation to form a chain, a structure similar thereto, and the like. Besides, other atoms, e.g. a nitrogen atom, and the like can also be further bound to the organic sulfur compound depending on another raw material to be used for baking or gas atmosphere to be used.

The iron compound is a compound in which an iron atom binds to an atom other than iron atoms. Examples of the atom other than iron atoms include, for example a sulfur atom. Examples of the iron compound include iron(II) sulfide (FeS), iron(III) sulfide ($Fe_2S_3$), iron disulfide ($FeS_2$), and the like. Among them, iron disulfide ($FeS_2$) is typical or preferable.

Accordingly, in the present invention, instead of saying that "the particulate active material comprises an organic sulfur compound", it can be said that "the particulate active material comprises at least a carbon atom and a sulfur atom", or instead of saying that "the particulate active material comprises an organic sulfur compound and an iron compound", it can also be said that "the particulate active material comprises at least a carbon atom, a sulfur atom, and an iron atom". Besides, a carbon element content, a sulfur element content, and an iron element content in a case where it comprises a carbon atom, a sulfur atom, and an iron atom are measured by methods described in Examples section below.

(Sulfur element content ($A_S$ in % by mass))

The sulfur element content, in % by mass, in the active material is preferably greater than 50.0% by mass, more preferably greater than 55.0% by mass, further preferably greater than 60.0% by mass, further preferably greater than 61.0% by mass, further preferably 61.2% by mass or more, further preferably greater than 62.0% by mass, further preferably greater than 63.0% by mass, further preferably 63.6% by mass or more, further preferably greater than 64.0% by mass, further preferably 65.0% by mass or more, further preferably greater than 65.0% by mass, further preferably greater than 66.0% by mass, further preferably greater than 70.0% by mass. An upper limit of the sulfur element content is, but not particularly limited to, usually about 80% by mass.

(Iron element content ($A_F$ in % by mass))

The iron element content, in % by mass, in the active material is preferably greater than 10.0% by mass, more preferably greater than 11.0% by mass, further preferably greater than 12.0% by mass, further preferably greater than 13.0% by mass, further preferably greater than 13.5% by mass, further preferably greater than 14.0% by mass, further preferably greater than 14.5% by mass, further preferably 14.9% by mass or more, further preferably greater than 15.0% by mass, further preferably 15.4% by mass or more, further preferably 15.5% by mass or more, further preferably greater than 16.0% by mass, further preferably greater than 16.1% by mass, further preferably greater than 17.0% by mass, further preferably greater than 17.3% by mass. An upper limit of the iron element content is, but not particularly limited to, usually about 25.0% by mass.

(Application density (D in mg/cm$^2$))

The application density, in mg/cm$^2$, of the active material on the electrode is preferably greater than 2.5 mg/cm$^2$, more preferably greater than 6.2 mg/cm$^2$, further preferably greater than 6.5 mg/cm$^2$, further preferably greater than 6.6 mg/cm$^2$, further preferably greater than 7.0 mg/cm$^2$, further preferably greater than 8.0 mg/cm$^2$, further preferably greater than 8.5 mg/cm$^2$, further preferably 8.6 mg/cm$^2$ or more, further preferably 9.0 mg/cm$^2$ or more, further preferably 9.2 mg/cm$^2$ or more, further preferably greater than 9.5 mg/cm$^2$. Its upper limit is not particularly limited, and the higher the upper limit is, the more preferable it is. Accordingly, although it is less meaningful to mention the upper limit of the application density, the upper limit can also be usually assumed to be about 15.0 mg/cm$^2$ merely as a reference value.

(Carbon element content)

The carbon element content, in % by mass, in the active material is preferably greater than 15.0% by mass, more preferably greater than 17.0% by mass, further preferably greater than 18.0% by mass. On the other hand, the carbon element content, in % by mass, is preferably less than 27.0% by mass, more preferably less than 25.0% by mass, further preferably less than 24.0% by mass.

(Hydrogen element content)

The hydrogen element content, in % by mass, in the active material is a relatively small amount since hydrogen atoms in a polymer react with sulfur into hydrogen sulfide by baking and the hydrogen sulfide is released to the outside of the system, thereby decreasing the hydrogen element content. The hydrogen element content in the active material is preferably 1.6% by mass or less. It is less than 1.5% by mass, more preferably 1.2% by mass or less, further preferably less than 1.1% by mass, further preferably less than 1.0% by mass, further preferably less than 0.5% by mass, further preferably 0.4% by mass or less, further preferably 0.3% by mass or less, further preferably 0.2% by mass or less. On the other hand, a lower limit of the hydrogen element content, in % by mass, may be 0.1% by mass, may be less than 0.1% by mass, or may be equal to or less than a detection limit.

(Median diameter)

The active material is pulverized to have a predetermined particle size and is preferably a particle having a size suitable for producing an electrode. A preferred particle size distribution of the particle of the active material is preferably about 1.0 $\mu$m or more and 40.0 $\mu$m or less in terms of median diameter (median diameter d50), from the viewpoint of an improvement in performance of the electrode and/or battery. The median diameter is more preferably 1.5 $\mu$m or more, further preferably 2.0 $\mu$m or more, further preferably 2.4 $\mu$m or more. Moreover, the median diameter is more preferably 30.0 $\mu$m or less, further preferably 25.0 $\mu$m or less, further preferably 20.0 $\mu$m or less, further preferably 15.0 $\mu$m or less. The median diameter can be measured by a method described in Examples section below.

[Inequality (1)]

For the electrode of the present invention, the product of the sulfur element content $A_S$, in % by mass, in the active material, the iron element content $A_F$, in % by mass, in the active material, and the application density D, in mg/cm$^2$, of the active material is greater than 7000, as described in the above-described inequality (1). The right side of the inequality (1) is preferably 7500, more preferably 8000, further preferably 8500, further preferably 9000, further preferably 9100, further preferably 9200, further preferably 9400, further preferably 9500, further preferably 10000. An upper limit of a value on the left side of the inequality (1) is not particularly limited, and the higher the upper limit is, the more preferable it is. Accordingly, although it is less meaningful to mention the upper limit of the value on the left side of the inequality (1), the upper limit can also be usually assumed to be about 20000, about 15000, or about 12000, merely as a reference value.

[Inequality (2)]

For the electrode of the present invention, a quotient obtained by dividing the product of the sulfur element content $A_S$, in % by mass, in the active material and the application density D, in mg/cm$^2$, of the active material by the thickness T, in $\mu$m, of the metal foil constituting the current collector is preferably greater than 24.0, as described in the above-described inequality (2). The right side of the inequality (2) is more preferably 25.0, further preferably 26.0, further preferably 27.0, further preferably 28.0, further preferably 28.5, further preferably 29.0, further preferably 29.4, further preferably 30.0, further preferably 30.8, further preferably 35.0, further preferably 36.0. An upper limit of a value on the left side of the inequality (2) is not particularly limited, and the higher the upper limit is, the more preferable it is. Accordingly, although it is less meaningful to mention the upper limit of the value on the left side of the inequality (2), the upper limit can also be usually assumed to be about 100, about 80, or about 60, merely as a reference value.

A preferred range of the thickness T, in $\mu$m, of the metal foil is 5 $\mu$m or more, and a range of the thickness T is more preferably 10 $\mu$m or more. On the other hand, T is preferably 40 $\mu$m or less, more preferably 30 $\mu$m or less, further preferably 25 $\mu$m or less.

[Charge and discharge capacity]

The electrode of the present invention exhibits excellent charge and discharge capacity. Besides, in the following descriptions, an initial discharge capacity refers to third discharge capacity ($DC_3$) unless otherwise noted. Here, the third discharge capacity is a discharge capacity when performing charge and discharge three times (the third discharge is defined in the following cycles: first discharge, first charge, second discharge, second charge, third discharge, third charge) after producing an electrode and a battery, where a discharge termination voltage is 1.0 V and a charge termination voltage is 3.0 V. In a case of discharge, when discharge is performed at a constant current (a current value corresponding to 50 mA per 1 g of positive electrode active material), a voltage of 3.0 V finally drops to 1.0 V. Total time, in h, spent during the voltage drop from 3.0 V to 1.0 V is measured, a capacity, in mAh, is obtained by multiplying the measured total time by an applied current, in mA, and the capacity is divided by a weight of the active material, thereby obtainig a specific capacity, in mAh/g. On the other hand, in a case of charge, charge is performed at a constant current, whereby the voltage rises conversely, and when the voltage finally reaches 3.0 V, the charge is terminated. The same applies to the 10th discharge capacity described below.

(Initial discharge capacity ($DC_3$))

The initial discharge capacity ($DC_3$), in mAh/g, in a case where the electrode of the present invention is used as a positive electrode is preferably greater than 400 mAh/g. The initial discharge capacity is preferably greater than 500 mAh/g, more preferably greater than 600 mAh/g, further preferably 634 mAh/g or more, further preferably 681 mAh/g or more, further preferably 690 mAh/g or more, further preferably greater than 700 mAh/g, further preferably greater than 730 mAh/g, further preferably greater than 745 mAh/g. An upper limit of the initial discharge capacity is not particularly limited, and the higher the upper limit is, the more preferable it is. Accordingly, although it is less meaningful to mention the upper limit of the initial discharge capacity, the upper limit can also be usually assumed to be, for example, about 1000 mAh/g merely as a reference value.

(10th discharge capacity ($DC_{10}$))

The discharge capacity in a case where the electrode of the present invention is used as a positive electrode and charge and discharge are repeated ten times, that is, the 10th discharge capacity ($DC_{10}$), in mAh/g, is preferably greater than 350 mAh/g. The discharge capacity is preferably greater than 400 mAh/g, more preferably greater than 500 mAh/g, further preferably greater than 600 mAh/g, further preferably 634 mAh/g or more, further preferably greater than 650 mAh/g, further preferably 671 mAh/g or more, further preferably 681 mAh/g or more, further preferably greater than 690 mAh/g, further preferably 723 mAh/g or more, further preferably 743 mAh/g or more. An upper limit of the discharge capacity is not particularly limited, and the higher the upper limit is, the more preferable it is. Accordingly, although it is less meaningful to mention the upper limit of the discharge capacity, the upper limit can also be usually assumed to be, for example, roughly equal to a value of the initial discharge capacity or about 900 mAh/g merely as a reference value.

Besides, when the 3rd discharge capacity and the 10th discharge capacity using the electrode of the present invention as a positive electrode are measured so that the electrode can sufficiently exhibit a performance relating to a discharge capacity of the positive electrode using a negative electrode and an electrolyte within the purview of the technical common knowledge which can be durably used as a lithium-ion secondary battery (such that lithium is not exhausted immediately), the 3rd discharge capacity and the 10th discharge capacity are determined by the structure of the positive electrode. For example, regarding the negative electrode, a negative electrode comprising lithium whose amount (molar quantity) is larger than one-hundredth (preferably one-tenth, more preferably one-half) of an amount of sulfur (molar quantity) in the positive electrode has only to be used. In Examples described below, a weight of a mixture layer containing a positive electrode active material is 103.4 mg to 144 mg (3 cm × 4 cm × application density), and the mixture layer also contains other components other than sulfur, so that an amount of sulfur (molar quantity) necessarily falls below 0.004491($\fallingdotseq$ 0.144/32.065) (this value becomes equal to or less than 71.5%). On the other hand, a weight of the negative electrode is 534 mg (4 cm × 5 cm × 0.5 mm × specific gravity of lithium), and the amount of lithium (molar quantity) becomes 0.076934($\fallingdotseq$ 0.534/6.941), so that an amount of lithium (molar quantity) in the negative electrode is sufficiently large. Moreover, for example, regarding the electrolyte, it is sufficient to make the amount of lithium (molar quantity) larger than one-hundredth (preferably one-tenth, more preferably one-half) of an amount of sulfur (molar quantity) in the positive electrode. In Examples described below, an amount of lithium in the electrolyte (molar quantity) becomes 0.002 = volume V of electrolyte (= 2.0 mL) × concentration (= 1.0 mol/L), so that the amount of lithium in the electrolyte (molar quantity) is sufficiently large. When the negative electrode and electrolyte that comprise a sufficiently large amount of lithium (molar quantity) are used as described above, the discharge capacity of the positive electrode can be sufficiently exhibited. Here, the volume V of the electrolyte, in mL, means a total volume of an electrolytic solution containing a solute or of a solid electrolyte.

[Application]

The electrode for lithium-ion secondary battery of the present invention can be used as a positive electrode or a negative electrode of a lithium-ion secondary battery. Moreover, the electrode for lithium-ion secondary battery of the present invention is preferably used as a positive electrode of a lithium-ion secondary battery.

The electrode for lithium-ion secondary battery can be produced by using materials described in the production-method section below in the same manner as described in the production-method section. That is, in a case where the above-described electrode for lithium-ion secondary battery is used as a positive electrode, a conductive aid, a binder, a current collector, and the like, which are described in the production-method section below, are used in the same manner as described in the production-method section, whereby the above-described electrode for lithium-ion secondary battery can be produced as a positive electrode, and in a case where the above-described electrode for lithium-ion secondary battery is used as a negative electrode, a conductive aid, a binder, a current collector, and the like, which are described in the production-method section below, are used in the same manner as described in the production-method section, whereby the above-described electrode for lithium-ion secondary battery can be produced as a negative electrode. As described above, these descriptions of the production-method section below can be taken into consideration as an explanation of the electrode for lithium-ion secondary battery.

<Lithium-ion secondar battery>

The lithium-ion secondary battery of the present invention is a lithium-ion secondary battery comprising the above-described electrode for lithium-ion secondary battery.

The lithium-ion secondary battery can be produced by using materials described in the production-method section below in the same manner as described in the production-method section. That is, in a case where the above-described electrode for lithium-ion secondary battery is used as a positive electrode, a negative electrode, an electrolyte, a separator, and the like, which are described in the production-method section below, are used in the same manner as described in the production-method section, whereby the lithium-ion secondary battery can be produced. On the other hand, in a case where the above-described electrode for lithium-ion secondary battery is used as a negative electrode, a positive electrode, an electrolyte, a separator, and the like, which are described in the production-method section below, are used in the same manner as described in the production-method section, whereby the lithium-ion secondary battery can be produced. As described above, these descriptions of the production-method section below can be taken into consideration as an explanation of the lithium-ion secondary battery.

[Inequality (3)]

For the lithium-ion secondary battery of the present invention, a quotient obtained by dividing the product of the sulfur element content $A_S$, in % by mass, in the active material and the application density D, in $mg/cm^2$, of the active material by the volume V, in mL, of the electrolyte is preferably greater than 240, as described in the above-described inequality (3). The right side of the inequality (3) is more preferably 250, further preferably 260, further preferably 270, further preferably 280, further preferably 285, further preferably 290, further preferably 294, further preferably 300, further preferably 310, further preferably 350, further preferably 360. An upper limit of a value on the left side of the inequality (3) is not particularly limited, and the higher the upper limit is, the more preferable it is. Accordingly, although it is less meaningful to mention the upper limit of the value on the left side of the inequality (3), the upper limit can also be usually assumed to be about 1000, about 800, or about 600, merely as a reference value.

Since a range of the volume V, in mL, of the electrolyte can vary in accordance with a size of battery, the range is not stipulated categorically, and a minimum amount that brings out the performance of the active material and causes the battery to operate sufficiently has only to be used. Merely as a reference value, for example, in a case of a laminated battery described in Examples, the volume V is preferably 1.0 mL or more, more preferably 1.2 mL or more, further preferably 1.5 mL or more. On the other hand, the volume V is preferably 4.0 mL or less, more preferably 3.0 mL or less, further preferably 2.5 mL or less.

[Application]

The lithium-ion secondary battery of the present invention is useful as a lithium-ion secondary battery having the improved overall performance of charge and discharge capacity, a capacity retention rate, and energy density.

<Production method>

Methods of producing the electrode and the lithium-ion secondary battery of the present invention are described below in the order from a method of producing the active material constituting the electrode.

[Production of active material]

The active material relating to the present invention can be produced by a production method comprising (1) mixing raw materials including a polymer, an iron ion-containing compound, and sulfur, thereby obtaining a baking raw material and (2) baking the baking raw material under a non-oxidizing atmosphere.

(Polymer)

The polymer is not particularly limited as long as it is a compound at least containing a carbon atom and a hydrogen atom and is a compound that takes in sulfur to form an organic sulfur compound in a case where it is baked together with an iron ion-containing compound and the sulfur under a non-oxidizing atmosphere. Moreover, the polymer may be a polymer containing a heteroatom such as a nitrogen atom, a sulfur atom, and the like. Specific examples of the polymer include, for example, a polymer of unsaturated chain hydrocarbon-based monomers, a condensate of substituted aromatic hydrocarbon and sulfur chloride, and the like. The polymer may be used alone, or two or more thereof may be used in combination.

<<Polymer of unsaturated chain hydrocarbon-based monomers>>

Examples of the polymer of unsaturated chain hydrocarbon-based monomers include, for example, resin such as an acrylic resin and the like. Moreover, examples of the polymer of unsaturated chain hydrocarbon-based monomers include a diene-based rubber and the like. One or more kinds of polymers of unsaturated chain hydrocarbon-based monomers can be used.
Examples of the acrylic resin include, for example, at least one polymer selected from the group consisting of: a polymer obtained by polymerizing at least one monomer selected from the group consisting of acrylate compounds represented by the following chemical formula (1); or a polymer obtained by polymerizing at least one monomer selected from the group consisting of acrylate compounds represented by the following chemical formula (1) and at least one monomer selected from the group consisting of diacrylate compounds represented by the following formula (2). One or more kinds of acrylic resins can be used, and one or more kinds of acrylate compounds can also be used.

$$CH_2=C\,(R^{11})\,COOR^{12} \qquad (1)$$

(wherein, $R^{11}$ is a hydrogen atom or a methyl group, and $R^{12}$ is an alkyl group.)

$$CH_2=C\,(R^{21})\,COO\text{-}Y\text{-}OCO\,(R^{22})\,C=CH_2 \qquad (2)$$

(wherein $R^{21}$ and $R^{22}$ are the same or different and are each a hydrogen atom or a methyl group, Y is a linear hydrocarbylene group, which may have at least one substituent selected from the group consisting of a hydroxyl group and an alkyl group, and a carbon skeleton constituting the hydrocarbylene group may have an ether bond with an oxygen atom, provided that, when there are two or more of the ether bonds, any adjacent oxygen atoms always have two or more intervening carbon atoms between them.).
In the chemical formula (1), $R^{11}$ is preferably a methyl group, and $R^{12}$ is preferably an alkyl group having 1 to 6 carbon atoms, more preferably an alkyl group having 1 to 4 carbon atoms, and among them, more preferably a methyl group, n-butyl, i-butyl, or t-butyl group. Examples of the compound represented by the chemical formula (1) include, for example, methyl (meth)acrylate, butyl (meth)acrylate, and the like, more preferably methyl methacrylate and butyl methacrylate. Here, "(meth)acrylate" of methyl (meth)acrylate and butyl (meth)acrylate represents either "acrylate" or "methacrylate" (the same shall apply hereinafter). A further preferred example of the compound represented by the chemical formula (1) is butyl methacrylate.
In the chemical formula (2), both $R^{21}$ and $R^{22}$ are preferably methyl groups. The number of carbon atoms in the hydrocarbylene group (straight chain) of Y is preferably 2 to 6, more preferably 2 or 3. The number of substituents in Y is preferably 1 to 4, more preferably 1 or 2. As the substituents in Y, one or more substituents selected from the group consisting of a hydroxyl group and an alkyl group having 1 to 4 carbon atoms are preferable, and as the alkyl group having 1 to 4 carbon atoms, a methyl group is preferable. When the carbon skeleton of Y has an ether bond with an oxygen atom, for example, a moiety corresponding to -Y-O- is preferably represented by the following chemical formula (3) (provided that no substituent in Y is considered in the chemical formula (3)).

$$-(CH_2)_l\text{-}(CH_2CH_2O)_m\text{-}(CH_2CH_2CH_2O)_n\text{-} \qquad (3)$$

(wherein l is 0 to 6, m is 0 to 3, and n is 0 to 2. However, l, m, and n cannot be 0 at the same time.)
In the chemical formula (3), it is preferable that l is 1, 2, 3, 4, 5, or 6, and m and n are 0; m is 1, 2, or 3, and l and n are 0; or n is 1 or 2 and l and m are 0.
Examples of the compound represented by the chemical formula (2) include, for example, ethylene glycol di(meth)acrylate, diethylene glycol di(meth)acrylate, triethylene glycol di(meth)acrylate, 1,6-hexanediol di(meth)acrylate, neopentine glycol di(meth)acrylate, glycerin di(meth)acrylate, and the like. Among them, ethylene glycol dimethacrylate is preferable.

Preferred examples of the acrylic resin include a homopolymer of methyl (meth)acrylate, a homopolymer of butyl (meth)acrylate, a copolymer of methyl (meth)acrylate and ethylene glycol di(meth)acrylate, a copolymer of butyl (meth)acrylate and ethylene glycol di(meth)acrylate, and the like. Among them, as the acrylic resin, an acrylic resin of methacrylate type is preferable. More preferred examples of the acrylic resin include a copolymer of methyl methacrylate and ethylene glycol dimethacrylate.

In the present invention, the acrylic resin is preferably in a form of a fine particle. Here, the fine particle refers to a particle having a particle size of 300.0 $\mu$m or less. The particle size is preferably 270.0 $\mu$m or less, more preferably 200.0 $\mu$m or less, further preferably 100.0 $\mu$m or less, further preferably 50.0 $\mu$m or less, further preferably 20.0 $\mu$m or less, further preferably 15.0 $\mu$m or less, further preferably 13.0 $\mu$m or less, further preferably 10.0 $\mu$m or less, further preferably 6.0 $\mu$m or less. On the other hand, a lower limit of the particle size is, but not particularly limited to, usually, for example, 0.1 $\mu$m or more, preferably 1.0 $\mu$m or more. The particle size is a value (median diameter) measured by a particle size distribution measuring device, PSA1090L manufactured by Anton Paar GmbH.

The acrylic resin may be a spherical fine particle or a porous fine particle. When the acrylic resin is porous, its oil absorption amount is preferably 100 mL/100 g or more, more preferably 110 mL/100 g or more, further preferably 120 mL/100 g or more, further preferably 130 mL/100 g or more, further preferably 140 mL/100 g or more. The oil absorption amount is a value measured according to JIS K 5101-13-2:2004. More specifically, it can be measured by the method described in Paragraph 0069 of JP 2017-88501 A.

A Mw of the acrylic resin is not particularly limited as long as it has the above-described structure. However, the Mw of the acrylic resin is usually in a range from 2000 to 1500000. The Mw is a value measured by gel permeation chromatography (GPC) (calibrated with polystyrene).

The acrylic resin is commercially available or can be produced by a conventional method within the purview of knowledge of those skilled in the art. Examples of the commercially available acrylic resin include, for example, those manufactured by Sekisui Kasei Co., Ltd.

Examples of the diene-based rubber include, for example, a natural rubber, an isoprene rubber, a butadiene rubber such as a high-cis polybutadiene rubber and the like, and the like. The diene-based rubber is commercially available or can be produced by a conventional method within the purview of knowledge of those skilled in the art.

<<Condensate of substituted aromatic hydrocarbon and sulfur chloride>>

Examples of the condensate of substituted aromatic hydrocarbon and sulfur chloride include, for example, a condensate of alkyl phenol and sulfur chloride, and the like. Specific examples of the condensate of alkyl phenol and sulfur chloride include, for example, TACKIROL V200, TS3108, and TS3109 manufactured by Taoka Chemical Co., Ltd., and Vultac 3 manufactured by Arkema, and the like. One or more kinds of condensates of substituted aromatic hydrocarbon and sulfur chloride can be used.

(Sulfur)

As sulfur, any of those in various forms such as a powdered sulfur, an insoluble sulfur, a precipitated sulfur, a colloidal sulfur, and the like can be used. Among them, a precipitated sulfur and a colloidal sulfur are preferable. One or more kinds of sulfur can be used.

A content of the sulfur is preferably greater than 50 parts by mass, more preferably greater than 100 parts by mass, further preferably greater than 300 parts by mass, further preferably greater than 400 parts by mass, further preferably 500 parts by mass or more, based on 100 parts by mass of the polymer. When the content is greater than 50 parts by mass, there is a tendency that charge and discharge capacity and cycle characteristics can be improved. On the other hand, there is no upper limit of the content of the sulfur, but it is usually preferably less than 1000 parts by mass, more preferably less than 900 parts by mass, further preferably less than 800 parts by mass, further preferably less than 700 parts by mass. When the content is less than 1000 parts by mass, there is a tendency to be advantageous in terms of cost. Besides, in the present specification, the term "cycle characteristics" refers to characteristics in which charge and discharge capacity of a secondary battery is maintained despite repeated charging/discharging. Therefore, as charging and discharging are repeated, a secondary battery with a high degree of decrease in charge and discharge capacity and a low capacity retention rate has poor cycle characteristics, while, on the contrary, a secondary battery with a low degree of decrease in charge and discharge capacity and a high capacity retention rate has excellent cycle characteristics.

As sulfur, any of various allotropes can be used, but those comprising $S_8$ sulfur which is solid at normal temperature and pressure are preferable, and $S_8$ sulfur alone is more preferable.

(Iron ion-containing compound)

The iron ion-containing compound is not particularly limited as long as it is a compound that forms an iron compound in a case where it is baked together with the polymer and sulfur under a non-oxidizing atmosphere. Examples of such an iron ion-containing compound can include an iron acid salt comprising a divalent or trivalent iron ion, an iron complex, and the like. Examples of the iron acid salt can include both an organic acid salt of iron and an inorganic acid salt of iron. On the other hand, examples of the iron complex can include a neutral iron complex and an iron complex ion salt (iron complex salt).

Examples of the organic acid salt of iron include, for example, a salt of divalent iron ($Fe^{2+}$) and organic acid, a salt of trivalent iron ($Fe^{3+}$) and organic acid, and the like. Among them, a salt of divalent iron and organic acid is preferable. The organic acid is, but not particularly limited to, one having a carboxyl group (-COOH), one having a sulfo group (-$SO_3$H), or the like. Among them, one having a carboxyl group is preferable. Specific examples of the organic acid include fatty acid, oxalic acid, tartaric acid, citric acid, malic acid, succinic acid, and the like. Specific examples of fatty acid include, for example, those having 1 to 6 carbon atoms such as acetic acid, propionic acid, butyric acid, and the like. Among them, acetic acid, oxalic acid, and the like are preferable. Preferred examples of the organic acid salt of iron include iron (II) acetate, iron (II) oxalate, and the like. They may be hydrates. One or more kinds of organic acid salts of iron can be used.

Examples of the inorganic acid salt of iron include, for example, a salt of divalent iron ($Fe^{2+}$) and inorganic acid, a salt of trivalent iron ($Fe^{3+}$) and inorganic acid, and the like. Among them, the salt of divalent iron and inorganic acid is preferable. Specific examples of the inorganic acid include hydrochloric acid, sulfuric acid, nitric acid, and the like. Among them, nitric acid and the like are preferable. Preferred examples of the inorganic acid salt of iron include iron (II) chloride, iron (III) chloride, iron (II) sulfate, iron (III) sulfate, iron (II) nitrate, iron (III) nitrate, and the like. They may be hydrates. One or more kinds of inorganic acid salts of iron can be used.

Examples of the iron complex include, for example, a divalent iron ($Fe^{2+}$) complex, a trivalent iron ($Fe^{3+}$) complex, and the like. The iron complex may be in a form of a neutral complex or in a form of a complex salt. A ligand that coordinates to the iron ion is not particularly limited, examples of which include, for example, halogen atoms such as a chlorine atom, a bromine atom, and the like, a cyano group, a dicyclopentadienyl group, N,N'-bis(salicylidene)ethylenediamine, and the like. Examples of the iron complex include, for example, potassium hexacyanidoferrate(II) ($[Fe(CN)_6]K_4$), potassium hexacyanidoferrate(III) ($[Fe(CN)_6]K_3$), sodium iron(III) chloride ($[FeCl_4]Na$), dicyclopentadienyl iron(II) (ferrocene), N,N'-bis(salicylidene)ethylene diaminato iron(III) chloride, and the like. One or more kinds of iron complexes can be used.

As the iron ion-containing compound, at least one selected from the group consisting of the above-described organic acid salt of iron, inorganic acid salt of iron, neutral iron complex, and iron complex salt can be used. Among them, the organic acid salt of iron, the inorganic acid salt of iron, or the neutral iron complex is preferable.

Although a particle size of the iron ion-containing compound is not particularly limited, the particle size is, for example, a median diameter and is preferably 1 μm or more, more preferably 2 μm or more. Moreover, the particle size is preferably 40 μm or less, further preferably 30 μm or less, further preferably 20 μm or less, further preferably 15 μm or less. The median diameter can be measured by a method described in Examples section below.

A content of an iron ion-containing compound is preferably 50 parts by mass or more and 300 parts by mass or less, based on 100 parts by mass of the polymer, from the viewpoint of an improvement in performance of the electrode and/or battery. The content is more preferably greater than 50 parts by mass, further preferably greater than 60 parts by mass, further preferably greater than 70 parts by mass, further preferably greater than 75 parts by mass. On the other hand, the content is more preferably less than 250 parts by mass, further preferably less than 200 parts by mass, further preferably less than 150 parts by mass, further preferably less than 125 parts by mass.

(Iron ion-containing compound-dispersed polymer)

In the present invention, the polymer and the iron ion-containing compound can be used as an iron ion-containing compound-dispersed polymer obtained by previously dispersing the iron ion-containing compound in the polymer. Such an iron ion-containing compound-dispersed polymer can be prepared by subjecting the polymer to a polymerization reaction in a state where iron ion-containing compounds are previously dispersed in monomers constituting the polymer. The polymerization reaction can be performed by a conventional method.

As the iron ion-containing compound-dispersed polymer, for example, an iron ion-containing compound-dispersed acrylic resin obtained by dispersing an iron ion-containing compound in an acrylic resin can be appropriately used. Preferred examples of the acrylic resin used for such a purpose include a homopolymer of methyl (meth)acrylate, a copolymer of methyl methacrylate and ethylene glycol dimethacrylate, and the like. Moreover, preferred examples of the iron ion-containing compound used for such a purpose include iron (II) oxalate and the like.

(Other materials)

The raw material may appropriately comprise other materials commonly used in this field, as desired. Examples of such materials include, for example, a conductive carbon material and the like.

<<Conductive carbon material>>

The raw material may comprise a conductive carbon material. This is because that it can improve conductivity of the active material. As such a conductive carbon material, a carbon material having a graphite structure is preferable. As the carbon material, for example, porous carbon material such as activated carbon and the like, graphite, carbon black, acetylene black, ketjen black, a carbon fiber (CF), as well as nano carbon material such as a carbon nanotube (CNT), carbon nanofiber, graphene, fullerene, and the like can be used. One or more kinds of conductive carbon materials can be used.

Among them, acetylene black, carbon black, and ketjen black are preferable because they are inexpensive and excellent in dispersibility. Moreover, a small amount of a CNT, graphene, or the like may be used in combination with acetylene black, carbon black, or ketjen black. Such a combined system makes it possible to further improve cycle characteristics of the lithium-ion secondary battery without significantly increasing the cost. Besides, the combined amount of the CNT or graphene is preferably 8% by mass or more and 12% by mass or less of a total amount of the conductive carbon material.

A content of the conductive carbon material is preferably greater than 5 parts by mass, more preferably greater than 10 parts by mass, based on 100 parts by mass of the polymer. When the content is greater than 5 parts by mass, there is a tendency to easily achieve the purpose of further improving charge and discharge capacity and cycle characteristics. On the other hand, the content is preferably less than 50 parts by mass, more preferably less than 40 parts by mass. When the content is less than 50 parts by mass, a proportion of a sulfur-containing structure in the active material does not relatively decrease, and there is a tendency to easily achieve the purpose of further improving charge and discharge capacity and cycle characteristics.

(Mixing step (1))

A mixing step is a step of preparing a baking raw material. The mixing step can be performed by mixing a polymer, an iron ion-containing compound, sulfur, and any other component. In this case, instead of the polymer and the iron ion-containing compound, the above-described iron ion-containing compound-dispersed polymer can also be used.

The above-described mixing can be performed by a conventional method and is not particularly limited as long as the mixing is a method of sufficiently mixing these components. In the present invention, examples of a preferred mixing method can at least include mixing by a WET method or mixing by a DRY method, which will be mentioned below.

<<WET method>>

In the present invention, the WET method comprises, for preparation of a raw material,

(a-1) adding a polymer and an iron ion-containing compound to a solvent such as an organic solvent and the like to obtain a mixture, or adding monomers capable of forming a polymer and an iron ion-containing compound and performing a polymerization reaction to obtain a mixture comprising a polymer in which the iron ion-containing compound is dispersed inside and on a surface of the polymer;
(a-2) removing the solvent from the mixture to obtain a dry mixture; and
(a-3) mixing the dry mixture and the sulfur.

In the substep (a-1), the method of adding the polymer or monomers, the iron ion-containing compound, and the like to the organic solvent is not particularly limited as long as the mixture can be obtained by mixing them. For example, (1) the polymer (or monomers) and the iron ion-containing compound may be simultaneously added to the organic solvent and mixed, (2) the polymer (or monomers) may be added to the organic solvent and mixed, and then the iron ion-containing compound may be further added and mixed, or (3) the iron-ion-containing compound may be added to the organic solvent and mixed, and then the polymer (or monomers) may be further added and mixed.

In the substep (a-1), as the organic solvent, an organic solvent commonly used in this field can be used, examples of which include, for example, N-methyl-2-pyrrolidone, N,N-dimethylformaldehyde, alcohol, hexane, water, acetone, ethers such as tetrahydrofuran, etc., and the like. Moreover, as the organic solvent, one that dissolves the polymer is preferable. This is because it contributes to a good mixing. One or more kinds of these solvents can be used. Besides, in a case where liquid monomers are used in the substep (a-1), the solvent is not essential, and when no solvent is used, the substep (a-2) can be omitted.

The substep (a-1) can be performed by stirring them in a container such as, for example, a beaker and the like.

In the substep (a-2), the removal of the organic solvent can be performed by a conventional method. For example, the removal can be performed by subjecting the mixture in the substep (a-1) to a drying method such as drying by heating, drying under reduced pressure, drying by heating under reduced pressure, and the like.

The dry mixture thus obtained is preferably pulverized before being subjected to the next step. This is because, in this way, it can be expected that the mixing in the substep (a-3) will be performed more appropriately.

In the substep (a-3), the mixing of the dry mixture and sulfur can be performed by a conventional method, examples of which can include, for example, a method of mixing them using a blender, and the like.

<<DRY method>>

In the present invention, the DRY method comprises, for preparation of a raw material,

(b-1) mixing the polymer, the iron ion-containing compound, and the sulfur in powder state.

Here, the powder refers to a state where each raw material that is solid has been made fine enough to be suitable for mixing for the purpose of the present invention. A size of each particle constituting the powder is not particularly limited as long as the mixing is appropriately performed, but it is usually within a range of 1 $\mu$m or more and 40 $\mu$m or less, for example. The size of the particle is preferably 2 $\mu$m or more, more preferably 3 $\mu$m or more, further preferably 4 $\mu$m or more and is preferably 30 $\mu$m or less, further preferably 20 $\mu$m or less, further preferably 15 $\mu$m or less, further preferably 10 $\mu$m or less, in terms of median diameter, from the viewpoint of an improvement in performance of the electrode and/or battery. The median diameter can be measured by a method described in Examples section below.

The mixing can be performed by a conventional method, for example, in the same manner as the mixing in the above-described substep (a-3).

In both the WET method and the DRY method, it is desirable to sufficiently mix raw materials in advance for baking. Moreover, when conductive carbon materials and the like are added to the raw materials, these additives also have only to be mixed in advance for baking so as to be included in the raw materials beforehand.

The raw materials thus obtained may be used as they are in the next baking step, or if desired, they can be formed into pellets and used in the next step.

(Baking step (2))

The baking step is a step of baking the raw materials as obtained above. The baking of the raw materials can be performed by a conventional method, for example, by heating the raw materials at a predetermined temperature rising rate until reaching a predetermined temperature, maintaining them at the predetermined temperature for a predetermined time, and then cooling them naturally.

<<Non-oxidizing atmosphere>>

The baking is preferably performed under a non-oxidizing atmosphere. The non-oxidizing atmosphere refers to an atmosphere that does not substantially contain oxygen, and is adopted to suppress oxidative deterioration and excessive pyrolysis of constituent components. Specifically, it refers to an inert gas atmosphere such as nitrogen, argon, and the like, a sulfur gas atmosphere, an ammonia gas atmosphere, or the like. Thus, the baking can be appropriately performed, for example, in a quartz tube under an inert gas atmosphere.

<<Temperature rising rate>>

The temperature rising rate is preferably within a range of, for example, 50°C/h or higher and 500°C/h or lower. The temperature rising rate is preferably 80°C/h or higher, more preferably 100°C/h or higher, further preferably 120°C/h or higher. On the other hand, the temperature rising rate is more preferably 400°C/h or lower, further preferably 300°C/h or lower, further preferably 200°C/h or lower. When the temperature rising rate is within such a range, there is a tendency to easily achieve the purpose of improving charge and discharge capacity and cycle characteristics.

<<Baking temperature/time>>

A baking temperature refers to a temperature after completion of the temperature rising of the raw materials, the temperature being maintained for a certain period of time for baking the raw materials. The temperature is preferably in a range of higher than 250°C and lower than 550°C. When it is higher than 250°C, there is a tendency to avoid insufficient sulfurization reaction and prevent a decrease in charge and discharge capacity of an object. On the other hand, when it is lower than 550°C, there is a tendency that decomposition of the raw materials can be prevented and a decrease in yield and a decrease in charge and discharge capacity can be prevented. The temperature is more preferably higher than 300°C, further preferably higher than 350°C, further preferably 370°C or higher. On the other hand, the temperature is more preferably lower than 500°C, further preferably lower than 450°C.

The baking temperature in the baking step is preferably higher than a temperature at which the iron ion-containing compound thermally decomposes, from the viewpoint of an improvement in performance of the electrode and/or the battery.

A time for maintaining the baking temperature has only to be appropriately set according to types of raw materials, a baking temperature, etc., but is preferably 1 hour or more and 6 hours or less, for example. When it is 1 hour or more, there is a tendency that the baking can be sufficiently advanced, and when it is 6 hours or less, there is a tendency that excessive pyrolysis of the constituent components can be prevented.

<<Device>>

Baking can be performed by, for example, a muffle furnace (FIG. 1), or can be performed using a continuous device such as, for example, a twin-screw extruder and the like. When the continuous device is used, there is an advantage that the sulfur-based active material can be continuously produced through a series of operations such as also performing baking while kneading, pulverizing, and mixing the raw materials in the device, and the like.

The muffle furnace (FIG. 1) is a furnace partitioned by a hot plate or the like so that a heat source (heater) is not exposed inside the furnace in order to prevent contamination of a sample. In FIG. 1, the muffle furnace 1 has a heater 2 in the lower part of the furnace, the heater being partitioned by the hot plate. A lid 3 is installed on the front surface of the furnace (the left end side in the figure), which makes the furnace to have a structure in which the inside of the furnace can be held with an atmosphere of an inert gas 4. A thermocouple (not shown) is attached to the lid, so that a temperature inside the furnace during baking can be measured. Two tiers of stainless steel (SUS) rectangular parallelepiped trays 5 and 6 for baking raw materials are installed on the upper tier and the lower tier, inside the furnace.

The inside of the furnace is configured so that gas (for example, an inert gas such as an argon (Ar) gas and the like) can be continuously supplied in from and discharged out to the outside through a gas introduction tube 7 and a gas discharge tube 8. The gas discharge tube 8 is connected to a trap tank 10 accommodating a sodium hydroxide aqueous solution 9, and an exhaust gas to exit from the muffle furnace 1 through the gas discharge tube 8 to the outside once passes through the sodium hydroxide aqueous solution 9 in the trap tank 10 and then is released to the outside. Therefore, even if the exhaust gas contains a hydrogen sulfide gas generated by reaction, the hydrogen sulfide gas is neutralized with the sodium hydroxide aqueous solution and removed from the exhaust gas.

(Step of removing residue)

There is a case where, in a processed product obtained after baking, unreacted sulfur and the like which are precipitated from the sulfur sublimated during baking and then cooled remain behind. In a case where these residues are present, it is desirable to remove these residues as much as possible because they may cause deterioration of cycle characteristics. Removal of the residues can be performed according to a conventional method such as, for example, drying by heating under reduced pressure, drying with hot air, washing with a solvent, etc.

(Pulverization/classification)

The obtained active material is preferably pulverized to have a predetermined particle size and classified, in order to obtain a particle having a size suitable for producing an electrode. A preferred size (particle size distribution) of the particulate active material is as described above.

The pulverization can be performed by a conventional method and can be performed, for example, by subjecting the active material to a pulverization treatment under a predetermined condition using a pulverizer such as a cutter mill, a jet mill, and the like. A condition for the pulverization varies in accordance with a mill to be used, etc., and in a case where a cutter mill (for example, Free Speed Mill FS-20 manufactured by Labonect) is used for example, the treatment can be performed at a rotation speed of 20,000 rpm or more and 30,000 rpm or less for 1 second or more and 30 seconds or less. Moreover, in a case where a dry jet mill (for example, Nano Jetmizer NJ-30 manufactured by Aishin Nano Technologies CO., LTD) is used, the treatment can be performed at a processing speed of 1 g/minute or more and 3 g/minute or less and at a pulverization pressure of 0.5 MPa or more and 2.0 MPa or less.

Besides, in the baking method using the twin-screw extruder as described above, pulverization of the produced active material into particle can also be performed, at the same time as production of the active material, by shearing during kneading.

[Production of electrode for lithium-ion secondary battery]

Using the particulate active material obtained above, an electrode for a lithium-ion secondary battery comprising an active material layer comprising the particulate active material can be produced by a conventional method. That is, the electrode can be obtained in the same manner as a case of production of a general lithium-ion secondary battery except that the above-described particulate active material is used as an active material.

(Case in use of particulate active material as positive electrode active material)

The positive electrode for the lithium-ion secondary battery can be produced in the same manner as in a case for a general positive electrode for a lithium-ion secondary battery, except that the above-described particulate active material is used as a positive electrode active material. For example, the positive electrode is produced by mixing the particulate active material with a conductive aid, a binder, and a solvent to prepare a paste-like positive electrode material, applying the positive electrode material to a current collector, and then drying it. Moreover, as another method, the positive electrode can also be produced, for example, by kneading the particulate active material together with a conductive aid, a binder, and a small amount of solvent using a mortar or the like and forming them into a film, followed by crimping it to a current collector using a press machine or the like. However, in this case, the application of the active material is performed so that the application density D, in $mg/cm^2$, of the active material satisfies the above-described inequality (1).

<<Conductive aid>>

Examples of the conductive aid include, for example, Vapor Grown Carbon Fiber (VGCF), carbon powder, carbon black (CB), acetylene black (AB), Ketjen black (KB), graphite, or a fine powder of metal that is stable at a positive electrode potential such as aluminum, titanium, and the like. Moreover, as the conductive aid, the above-described conductive carbon material can also be used. One or two or more kinds of these conductive aids can be used.

<<Binder>>

Examples of the binder include polyvinylidene fluoride (PolyVinylidene DiFluoride: PVDF), polytetrafluoroethylene (PTFE), a styrenebutadiene rubber (SBR), polyimide (PI), polyamideimide (PAI), carboxymethylcellulose (CMC), polyvinyl chloride (PVC), an acrylic resin, a methacrylic resin (PMA), polyacrylonitrile (PAN), a modified polyphenylene oxide (PPO), polyethylene oxide (PEO), polyethylene (PE), polypropylene (PP), and the like. One or more kinds of these binders can be used.

<<Solvent>>

Examples of the solvent include N-methyl-2-pyrrolidone, N,N-dimethylformaldehyde, alcohol, hexane, water, and the like. One or more kinds of these solvents can be used.

<<Compounding amount>>

A compounding amount of these materials constituting the positive electrode is not particularly limited, but, for example, 2 to 100 parts by mass of a conductive aid, 2 to 50 parts by mass of a binder, and an appropriate amount of a solvent are preferably compounded based on 100 parts by mass of the active material. However, in this case, for the relationship of the sulfur element content $A_S$, in % by mass, and the iron element content $A_F$, in % by mass, of the active material with the application density D, in $mg/cm^2$, of the active material, the product of $A_S$, $A_F$, and D shall be determined to satisfy the above-described inequality (1).

<<Current collector>>

As the current collector, those generally used for a positive electrode for a lithium-ion secondary battery have only to be used. For example, examples of the current collector include those composed of metal foil, such as an aluminum foil, an aluminum mesh, a punched aluminum sheet, an expanded aluminum sheet, a stainless steel foil, a stainless steel mesh, a punched stainless steel sheet, an expanded stainless steel sheet, a nickel foam, a nickel non-woven fabric, a copper foil, a copper mesh, a punched copper sheet, an expanded copper sheet, a titanium foil, a titanium mesh, and the like, as well as a carbon non-woven fabric, a carbon woven fabric, and the like. Among them, a current collector comprising metal foil is preferable. The current collector may be used alone, or two or more thereof may be used in combination. Besides, a surface of the current collector may be coated with carbon or the like. Specific examples of such a current collector having a surface coated with carbon or the like include, for example, a carbon coated aluminum foil and the like. In this case, the current collector comprises a carbon coated part.

(Case in use of particulate active material as negative electrode active material)

The negative electrode for the lithium-ion secondary battery can be produced in the same manner as in a case for a general negative electrode for a lithium-ion secondary battery, except that the above-described particulate active material is used as a negative electrode active material. For example, the negative electrode can be produced by mixing the particulate active material with a conductive aid, a binder, and a solvent to prepare a paste-like negative electrode material, applying the negative electrode material to a current collector, and then drying it. Moreover, as another method, the negative electrode can also be produced, for example, by kneading the particulate active material together with a conductive aid, a binder, and a small amount of solvent using a mortar or the like and forming them into a film, followed by crimping it to a current collector using a press machine or the like. However, in this case, the application of the active material is performed so that the application density D, in $mg/cm^2$, of the active material satisfies the above-described inequality (1).

As the conductive aid, the binder, and the solvent, the same ones as in the case of using the particulate active material as the positive electrode active material can be used, and the same can also be applied to the current collector.

[Production of lithium-ion secondary battery]

The lithium-ion secondary battery of the present invention can be produced in the same manner as in a case of production of a general lithium-ion secondary battery, except that the electrode for the lithium-ion secondary battery obtained above is used.

(Case in use of particulate active material as positive electrode active material)

The lithium-ion secondary battery of the present invention can be produced using a negative electrode and an electrolyte, and further, if desired, a member such as a separator and the like, in addition to a positive electrode comprising the above-described particulate active material (positive electrode active material), according to a conventional method.

<<Negative electrode>>

As the negative electrode material, a known metallic lithium, a carbon-based material such as graphite and the like, a silicon-based material such as a silicon thin film and the like, and an alloy-based material such as copper-tin, cobalt-tin, and the like can be used. When a lithium-free material, for example, a carbon-based material, a silicon-based material, an alloy-based material, or the like, among the above-described negative electrode materials, is used as the negative electrode material, it is advantageous that a short circuit between the positive and negative electrodes due to generation of dendrites is unlikely to occur. However, when these lithium-free negative electrode materials are used in combination with the positive electrode of the present invention, neither the positive electrode nor the negative electrode contains lithium. For this reason, a lithium pre-doping process of inserting lithium into either or both of the negative electrode and the positive electrode in advance is required. As a lithium pre-doping method, a known method has only to be used. For example, examples of the lithium pre-doping method when doping lithium into the negative electrode include a method of inserting lithium by an electrolytic doping method of assembling a half cell using metallic lithium as a counter electrode and electrochemically doping lithium and a method of inserting lithium by a pasting pre-doping method of attaching a metallic lithium foil to the electrode, then leaving it in an electrolyte, and doping it by utilizing diffusion of lithium into the electrode. Moreover, when pre-doping lithium into the positive electrode, the above-described electrolytic doping method can be used. As the lithium-free negative electrode materials, silicon-based materials that are negative electrode materials with a high capacity are particularly preferable, and among them, a thin-film silicon, which is thin in electrode thickness and thus is advantageous in terms of capacity per volume, is more preferable.

<<Electrolyte>>

The electrolyte compensates, by flow of ions, charge resulting from emission of an electron to an external circuit accompanied by oxidation/reduction of the active material at a positive electrode/negative electrode. As the electrolyte used for the lithium-ion secondary battery, those obtained by dissolving an alkali metal salt that is an electrolyte in an organic solvent can be used. As the organic solvent, it is preferable to use at least one selected from non-aqueous solvents such as ethylene carbonate, propylene carbonate, dimethyl carbonate, diethyl carbonate, ethyl methyl carbonate, dimethyl ether, $\gamma$-butyrolactone, acetonitrile, and the like. As the electrolyte, $LiPF_6$, $LiBF_4$, $LiAsF_6$, $LiCF_3SO_3$, LiI, $LiClO_4$, and the like can be used. A concentration of the electrolyte has only to be about 0.5 to 1.7 mol/L. Besides, the electrolyte is not limited to one in a liquid state. For example, when the lithium-ion secondary battery is a lithium polymer secondary battery, the electrolyte is in a solid state (for example, a polymer gel state).

<<Separator>>

The lithium-ion secondary battery may comprise a member such as a separator and the like, in addition to the negative electrode, the positive electrode, and the electrolyte as mentioned above. The separator is interposed between the positive electrode and the negative electrode, permits ion migration between the positive electrode and the negative electrode, and prevents an internal short circuit between the positive electrode and the negative electrode. If the lithium-ion secondary battery is of a sealed type, the separator is required to have a function of retaining the electrolyte. As the separator, it is preferable to use a thin and microporous or non-woven fabric film made of polyethylene, polypropylene, polyacrylonitrile, aramid, polyimide, cellulose, glass, or the like.

<<Shape>>

A shape of the lithium-ion secondary battery is not particularly limited, and various shapes such as a cylindrical shape, a stacked shape, a coin shape, a laminated shape, a button shape, and the like can be used.

(Case in use of particulate active material as a negative electrode active material)

The lithium-ion secondary battery of the present invention can be produced using a positive electrode and an electrolyte, and further, if desired, a member such as a separator and the like, in addition to a negative electrode comprising the above-described particulate active material (negative electrode active material), according to a conventional method.

<<Positive electrode>>

The positive electrode material is not particularly limited as long as it is, for example, a transition metal oxide or solid solution oxide that contains lithium, or a substance capable of electrochemically absorbing and releasing lithium ions. Examples of the transition metal oxide that contain lithium include, for example, a Li-Co-based composite oxide such as $LiCoO_2$ and the like, a Li-Ni-Co-Mn-based composite oxide such as $LiNi_xCo_yMn_zO_2$ and the like, a Li-Ni-based composite oxide such as $LiNiO_2$ and the like, a Li-Mn-based composite oxide such as $LiMn_2O_4$ and the like, etc. Examples of the solid solution oxide include, for example, $Li_aMn_xCo_yNi_zO_2$ ($1.150 \leq a \leq 1.430$, $0.450 \leq x \leq 0.600$, $0.100 \leq y \leq 0.150$, $0.200 \leq z \leq 0.280$), $LiMn_xCoyNi_zO_2$ ($0.300 \leq x \leq 0.850$, $0.100 \leq y \leq 0.300$, $0.100 \leq z \leq 0.300$), $LiMn_{1.5}Ni_{0.5}O_4$, and the like. These compounds may be used alone, or multiple kinds thereof may be mixed and used.

As for the electrolyte, the separator, and the shape of lithium-ion secondary battery, the same ones as in the case of using the particulate active material as the positive electrode active material can be used.

EXAMPLES

Although the present invention will be described based on Examples, it is not limited to Examples only.

Various chemicals used in Examples and Comparative examples are collectively shown below.

<Materials used in tests>

Iron ion-containing compound: Iron (II) oxalate dihydrate prepared in Synthesis example 1

Iron ion-containing compound-dispersed polymer: Iron ion-containing compound-dispersed acrylic resin prepared in Synthesis example 2 (copolymer of methyl methacrylate (MMA) and ethylene glycol dimethacrylate (EGDMA) (acrylic resin in which MMA:EGDMA = 80:20 (mass ratio) and that is in a state where an iron ion-containing compound is dispersed inside or onto a surface of the acrylic resin))

Polymer: Acrylic resin obtained by performing polymerization in the same manner as in Production example 2 except that no iron ion-containing compound is used (MMA:EGDMA = 80:20 (mass ratio)

Sulfur: Precipitated sulfur manufactured by Tsurumi Chemical Industry Co., Ltd.

Synthesis example 1 (Iron ion-containing compound)

A substance obtained by pulverizing iron (II) oxalate dihydrate (iron (II) oxalate dihydrate manufactured by KANTO CHEMICAL CO., INC., Extra pure) for 10 minutes using a freezing pulverizer (JFC-2000 manufactured by Japan Analytical Industry Co., Ltd.) was used as an iron ion-containing compound. Particle size (median diameter d50): 2.10 $\mu$m, specific surface area: 6.6 $m^2$/g.

Synthesis example 2 (Iron ion-containing compound-dispersed polymer)

80 parts by mass of methyl methacrylate (MMA) and 20 parts by mass of ethylene glycol dimethacrylate (EGDMA) were mixed to prepare a mixture, in which, further, 100 parts of an iron ion-containing compound were dispersed, and the mixture was subjected to a polymerization reaction, thereby obtaining an acrylic resin in which an iron ion-containing compound was dispersed inside or onto a surface of the acrylic resin. A polymerization conversion ratio was 100%.

Example and Comparative example

<Production of particulate active material>

(Baking raw material)

According to Table 2, respective components were mixed together in a blender to obtain a raw material for baking.

(Reaction device for baking)

A muffle furnace (FIG. 1) was used to bake the raw material. The muffle furnace in FIG. 1 is as described above.

(Baking step)

First, an atmosphere in a muffle furnace was replaced with an Ar gas three times using a vacuum pump with the baking raw material being contained in a tray that was a SUS container. Then, while continuously supplying the Ar gas at a flow rate of 100 mL/min from a gas introduction tube, heating of the muffle furnace was started 30 minutes after the start of supply. The temperature was increased at a temperature rising rate of 5°C/h, and when the temperature of the baking raw material reached a baking temperature described in Table 2, heat treatment was performed for 2 hours while maintaining the baking temperature. Next, while adjusting the flow rate of the Ar gas, the temperature of the baked material was naturally cooled to 25°C under an Ar gas atmosphere, and then the baked substance was taken out from the muffle furnace.

(Pulverizing step)

Pulverization of the baked substance was performed using a cutter mill, a dry jet mill, or the like. Pulverizing steps for Production examples 1-7 will be described below.

For Production examples 1-6, as shown in Table 1, the pulverization was performed by processing a baked substance at a predetermined rotation speed for a predetermined time period using a cutter mill (free speed mill, FS-20, manufactured by Labonect).

Table 1

|  | Type of mill | Rotation speed (rpm) | Processing time (second) |
| --- | --- | --- | --- |
| Production example 1 | Cutter mill | 25,000 | 10 |
| Production example 2 | Cutter mill | 25,000 | 10 |
| Production example 3 | Cutter mill | 25,000 | 3 |
| Production example 4 | Cutter mill | 25,000 | 1 |
| Production example 5 | Cutter mill | 25,000 | 10 |
| Production example 6 | Cutter mill | 25,000 | 10 |

On the other hand, for Production example 7, the pulverization was performed by processing a baked substance using a dry jet mill (Nano Jetmizer NJ-30 manufactured by Aishin Nano Technologies CO., LTD) at a processing speed of 2 g/min and at a pulverization pressure of 1.1 MPa.

(Classifying step)

In order to remove coarse particles from the baked substance after pulverization, the baked substance was classified using a 32 μm mesh stainless steel sieve to obtain an active material.

<Physical properties of active material>

(Elemental analysis)

Elemental analysis was performed on the active materials produced in Examples and Comparative examples.
For carbon, hydrogen, nitrogen, and sulfur, a mass ratio (%) in a total amount of active materials was calculated from a mass measured using a vario MICRO cube, a fully automatic elemental analyzer, manufactured by Elementar. The results are shown in Table 2.

(Iron element content)

The active materials produced in Examples and Comparative examples were subjected to thermogravimetry, and based on the measurement results obtained, each iron element amount, in % by mass, was calculated.
Thermogravimetry was performed using TGA Q500 manufactured by TA Instruments. A measurement condition was such that, after heating the active material to 750°C under an Ar atmosphere, air was introduced to completely decompose a measurement sample. Then, an ash content ratio, in % by mass, in each active material was calculated from a measured weight reduction rate, in % by mass, by the following calculation.

Ash content ratio (% by mass) = 100 - weight reduction rate (% by mass)

Moreover, as it was confirmed that iron elements in the present Examples and Comparative examples were present as iron disulfide ($FeS_2$), a ratio of iron disulfide, in % by mass, was calculated from an ash content ratio, in % by mass, for each of the present Examples and Comparative examples by calculation shown below. That is, it can be seen, from a weight reduction rate (100% by mass) for Production example 8 in Table 2, that a polymer 1 (acrylic resin) is completely decomposed after the polymer 1 is converted to a sulfide. On the other hand, it can be seen, from a weight reduction rate (36% by mass) for Production example 9, that a weight of iron disulfide ($FeS_2$) in an active material is reduced by an amount of 36% by mass. Therefore, a ratio, in % by mass, of iron disulfide ($FeS_2$) in each active material was calculated by the following calculation,

$$\text{Ratio of } FeS_2 \text{ (\% by mass) = ash content ratio} \times \{100/(100 - 36)\}.$$

Furthermore, an iron element content (Fe ratio, in % by mass) was calculated from a ratio of $FeS_2$, in % by mass, by the following calculation, Fe ratio (% by mass) = Ratio of $FeS_2$ × atomic mass of Fe / (atomic mass of Fe + atomic mass of S × 2), (provided that 55.845 was used as atomic mass of Fe, and 32.065 was used as atomic mass of S).

(Median diameter)

Using a laser diffraction/scattering type particle size distribution analyzer (particle size distribution analyzer PSA1090L manufactured by Anton Paar GmbH), a volume basis cumulative 50% size (median diameter d50) was measured using water as a dispersion medium.
The results are as shown in Table 2 below.

Table 2

| | Production example | | | | | | | | |
|---|---|---|---|---|---|---|---|---|---|
| | 1 | 2 | 3 | 4 | 5 | 6 | 7 | 8 | 9 |
| Active material | | | | | | | | | |
| Baking | | | | | | | | | |
| Iron ion-containing compound-dispersed polymer | 200 | 200 | 200 | 200 | 200 | 200 | 200 | - | - |
| Polymer | - | - | - | - | - | - | - | 100 | - |
| Iron ion-containing compound | - | - | - | - | - | - | - | - | 100 |
| Sulfur | 600 | 500 | 500 | 500 | 400 | 600 | 500 | 300 | 300 |
| Baking temperature (°C) | 400 | 370 | 370 | 370 | 370 | 370 | 370 | 400 | 400 |
| Elemental analysis (% by mass) | | | | | | | | | |
| C | 19.9 | 19.8 | 20.0 | 20.1 | 23.4 | 17.1 | 19.3 | 40.9 | 0.72 |
| H | 0.2 | 0.3 | 1.2 | 0.4 | 0.2 | 0.2 | 0.4 | 0.72 | 0.37 |
| N | 0.0 | 0.0 | 0.0 | 0.0 | 0.0 | 0.0 | 0.0 | 0.00 | 0.00 |
| S [$A_S$] | 67.1 | 66.4 | 61.2 | 63.6 | 58.5 | 71.5 | 62.7 | 56.3 | 49.8 |
| Median diameter d50 ($\mu$m) | 3.7 | 2.4 | 4.1 | 10.6 | 2.8 | 3.1 | 1.4 | - | |
| Thermogravimetry | | | | | | | | | |
| Weight reduction rate (% by mass) (a) | 78.9 | 78.6 | 79.5 | 77.8 | 76.1 | 82.0 | 78.0 | 100 | 36 |
| Ash content ratio (% by mass) (b) [100 - (a)] | 21.1 | 21.4 | 20.5 | 22.2 | 23.9 | 18.0 | 22.0 | 0 | 64 |
| Ratio of $FeS_2$ (% by mass) (c) [b $\times$ 100/(100 - 36)] | 33.0 | 33.4 | 32.0 | 34.8 | 37.3 | 28.2 | 34.4 | 0 | 100 |
| Iron element content (% by mass) [$A_F$] [c $\times$ Fe/(Fe + S $\times$ 2)] | 15.4 | 15.5 | 14.9 | 16.2 | 17.4 | 13.1 | 16.0 | 0 | 46.5 |

<Production of positive electrode and lithium-ion secondary battery>

According to Table 3, a positive electrode was produced as follows using an active material obtained above, and furthermore, a lithium-ion secondary battery using the positive electrode was produced as follows.

(Positive electrode)

The active material obtained above was used as an active material, acetylene black was used as a conductive aid, and the acrylic resin was used as a binder. They were weighed so that a proportion of the active material:conductive aid:binder became 90:5:5 (% by mass), put in a container, stirred and mixed with a rotating and revolving mixer (ARE-250 manufactured by THINKY CORPORATION) using milliQ water for a dispersant to produce a uniform slurry. The slurry produced was applied onto a 20 $\mu$m carbon-coated aluminum foil using an applicator with a slit width of 200 to 300 $\mu$m, and compressed using a roll press to obtain an electrode, which was then heated and dried at 120°C for 3 hours using a drying device. After the drying, the electrode was cut into such a shape that a part forming a mixture layer comprising an active material has 4 cm width and 3 cm length and the electrode further also has an exposed part of a positive electrode current corrector to be a positive electrode tub, thereby obtaining an electrode (positive electrode). Then, a mass of the electrode was measured to calculate an amount of an active material in the electrode from the above-mentioned ratio. Besides, "Application density (mg/cm$^2$)" described in Table 3 refers to an application density of an active material.

(Negative electrode)

For the negative electrode, a metallic lithium foil (manufactured by Honjo Metal Co., Ltd. and having a thickness of 0.5 mm) was used, and a cupper foil was used for a negative electrode current collector. The metallic lithium foil was cut to have a width of 5 mm and a length of 4 cm and was attached to the cupper foil to obtain an electrode (negative electrode).

(Electrolyte)

As the electrolyte, a nonaqueous electrolyte in which $LiPF_6$ was dissolved in a mixed solvent of ethylene carbonate and diethyl carbonate was used. Ethylene carbonate and diethyl carbonate were mixed at a volume ratio of 1:1. A concentration of $LiPF_6$ in the electrolyte was 1.0 mol/L.

(Lithium-ion secondary battery)

A laminated battery was produced using the above-described positive electrode and negative electrode. In detail, in a dry room, a separator (Celgard 2400 manufactured by Celgard LLC, a polypropylene microporous membrane with a thickness of 25 $\mu$m) and a glass non-woven fabric filter (440 $\mu$m thickness, GA100 manufactured by ADVANTEC) were clamped between the positive electrode and the negative electrode to form an electrode body battery. This electrode body battery was accommodated in a laminated pack formed of an aluminum laminated film (manufactured by MTI Corporation). The above-described electrolyte (2.0 mL) was injected into the laminated pack. The laminated pack was sealed with an air degassing sealer to obtain a lithium-ion secondary battery of Example 1.

<Evaluation on lithium-ion secondary battery>

(Discharge capacity, capacity retention rate)

Each laminated lithium-ion secondary battery produced in Examples and Comparative examples was charged and discharged at a current value corresponding to 50 mA per 1 g of a positive electrode active material under a condition of a test temperature at 30°C. A discharge termination voltage was set to 1.0 V, and a charge termination voltage was set to 3.0 V. Moreover, while charging and discharging are repeated, the first, the second, the third, and the 10th battery discharge capacities, in mAh, were observed.

The third discharge capacity $DC_3$, in mAh/g, was defined as an initial capacity. The larger the initial capacity is, the larger the charge and discharge capacity of the lithium-ion secondary battery is, which can be evaluated to be preferable. Moreover, from the 10th discharge capacity $DC_{10}$, in mAh/g, and the third discharge capacity $DC_3$, in mAh/g, a capacity retention rate, in %, was calculated by the following equation. It can be said that the higher the capacity retention rate is, the more excellent the cycle characteristics of the lithium-ion secondary battery is.

$$\text{Capacity retention rate (\%)} = (DC_{10}/DC_3) \times 100.$$

(Energy density)

Using the discharge capacity of the active material and an average discharge voltage at the tenth cycle, an energy amount mWh, i.e., mAh$\times$V, of an electrode per 1 cm$^2$ was calculated, and an energy density, in mWh/mg, of the electrode was calculated by dividing the energy amount by a weight per 1 cm$^2$.

(Charge and discharge capacity index)

The 10th discharge capacity ($DC_{10}$), in mAh/g, in each of Examples and Comparative examples was indicated as an index using the following equation. The larger the index is, the larger the discharge capacity is, which is preferable. The measurement was made using a battery performance evaluation device (BLS system manufactured by KEISOKUKI CENTER CO.,LTD.),

Charge and discharge capacity index = 10th discharge capacity in each of Examples and Comparative examples / discharge capacity in Comparative example 1 $\times$ 100.

(Capacity retention rate index)

The capacity retention rate ($DC_{10}/DC_3$), in %, in each of Examples and Comparative examples was indicated as an index using the following equation. The larger the index is, the larger the capacity retention rate is, which is preferable, Capacity retention rate index = capacity retention rate in each of Examples and Comparative examples / capacity retention rate in Comparative example 1 × 100.

(Energy density index)

The energy density in each of Examples and Comparative examples was indicated as an index using the following equation. The larger the index is, the larger the energy density is, which is preferable, Energy density index = energy density in each of Examples and Comparative examples / energy density in Comparative example 1 × 100.

(Overall performance index)

An average value of a total value of a charge and discharge capacity index, a capacity retention rate index, and an energy density index is defined as an overall performance index.

Table 3

| | Example | | | | | | | | Comparative example |
|---|---|---|---|---|---|---|---|---|---|
| | 1 | 2 | 3 | 4 | 5 | 6 | 7 | 8 | 1 |
| Active material | | | | | | | | | |
| Production example | 1 | 2 | 3 | 4 | 5 | 6 | 3 | 3 | 7 |
| Sulfur element content (% by mass) [$A_S$] | 67.1 | 66.4 | 61.2 | 63.6 | 58.5 | 71.5 | 61.2 | 61.2 | 62.7 |
| Iron element content (% by mass) [$A_F$] | 15.4 | 15.5 | 14.9 | 16.2 | 17.4 | 13.1 | 14.9 | 14.9 | 16.0 |
| Electrode | | | | | | | | | |
| Application density (mg/cm$^2$) [D] | 9.2 | 10.1 | 10.1 | 9.0 | 10.1 | 10.1 | 8.6 | 12.0 | 6.2 |
| Thickness of metal foil ($\mu$m) [T] | 20 | 20 | 20 | 20 | 20 | 20 | 20 | 20 | 20 |
| As×Ar×D [Inequality (1)] | 9507 | 10395 | 9210 | 9273 | 10281 | 9460 | 7842 | 10943 | 6220 |
| As×D/T [Inequality (2)] | 30.9 | 33.5 | 30.9 | 28.6 | 29.5 | 36.1 | 26.3 | 36.7 | 19.4 |
| Battery | | | | | | | | | |
| Volume of electrolyte (mL) [V] | 2.0 | 2.0 | 2.0 | 2.0 | 2.0 | 2.0 | 2.0 | 2.0 | 2.0 |
| As×D/V [Inequality (3)] | 309 | 335 | 309 | 286 | 295 | 361 | 263 | 367 | 194 |
| Discharge capacity (mAh/g) | | | | | | | | | |
| 1st ($DC_1$) | 974 | 935 | 952 | 912 | 870 | 913 | 953 | 933 | 596 |
| 2nd ($DC_2$) | 792 | 740 | 796 | 724 | 682 | 705 | 798 | 778 | 332 |
| 3rd ($DC_3$) | 740 | 690 | 744 | 681 | 634 | 681 | 746 | 726 | 306 |
| 10th ($DC_{10}$) | 694 | 687 | 741 | 681 | 634 | 671 | 743 | 723 | 290 |

(continued)

| | Example | | | | | | | | Comparative example |
|---|---|---|---|---|---|---|---|---|---|
| | 1 | 2 | 3 | 4 | 5 | 6 | 7 | 8 | 1 |
| Discharge capacity (mAh/g) | | | | | | | | | |
| Capacity retention rate (%) ($DC_{10}/DC_3$) | 94 | 100 | 100 | 100 | 100 | 99 | 100 | 100 | 95 |
| Energy density (mWh/mg) | 0.796 | 0.801 | 0.873 | 0.764 | 0.745 | 0.788 | 0.833 | 0.888 | 0.282 |
| Charge and discharge capacity index | 239 | 237 | 256 | 235 | 219 | 231 | 256 | 249 | 100 |
| Capacity retention rate index | 99 | 105 | 105 | 105 | 105 | 104 | 105 | 105 | 100 |
| Energy density index | 282 | 284 | 310 | 271 | 264 | 279 | 295 | 315 | 100 |
| Overall performance index | 207 | 209 | 223 | 204 | 196 | 205 | 219 | 223 | 100 |

According to Table 3, an improvement in the overall performance of the charge and discharge capacity, the capacity retention rate, and the energy density is exhibited in Examples.

<Embodiments>

Preferred embodiments are shown below.
[1] An electrode for lithium-ion secondary battery,

the electrode comprising an active material layer comprising a particulate active material,
the active material comprising an organic sulfur compound and an iron compound,
wherein $A_s$, $A_F$, and D satisfy the following inequality (1), and the right side of the following inequality (1) is preferably 7500,

$$(1)\ A_s \times A_F \times D > 7000,$$

where $A_s$ represents a sulfur element content, in % by mass, in the active material, $A_F$ represents an iron element content, in % by mass in the active material, and D represents an application density, in mg/cm$^2$, of the active material.

[2] The electrode of [1] above, wherein a value on the right side of the inequality (1) is 8000, preferably 8500, more preferably 9000, further preferably 9100, further preferably 9200, further preferably 9400, further preferably 9500, further preferably 10000.

[3] The electrode of [1] or [2] above, wherein the $A_S$ (sulfur element content in the active material) is greater than 65.0% by mass, preferably greater than 66.0% by mass, more preferably greater than 70.0% by mass.

[4] The electrode of any one of [1] to [3] above, wherein the $A_F$ (iron element content in the active material) is greater than 15.0% by mass, more preferably 15.4% by mass or more, further preferably 15.5% by mass or more, further preferably greater than 16.0% by mass, further preferably greater than 16.1% by mass, further preferably greater than 17.0% by mass, further preferably greater than 17.3% by mass.

[5] The electrode of any one of [1] to [4] above, wherein the D (application density of the active material) is greater than 2.5 mg/cm$^2$, preferably greater than 6.2 mg/cm$^2$, more preferably greater than 6.5 mg/cm$^2$, further preferably greater than 6.6 mg/cm$^2$, further preferably greater than 7.0 mg/cm$^2$, further preferably greater than 8.0 mg/cm$^2$, further

preferably greater than 8.5 mg/cm$^2$, further preferably 8.6 mg/cm$^2$ or more, further preferably 9.0 mg/cm$^2$ or more, further preferably 9.2 mg/cm$^2$ or more, further preferably greater than 9.5 mg/cm$^2$.

[6] The electrode of any one of [1] to [5] above, wherein $DC_3$ is greater than 400 mAh/g, where $DC_3$ represents an initial discharge capacity, in mAh/g, in a case where the electrode is used as a positive electrode.

[7] The electrode of [6] above, wherein the $DC_3$ (initial discharge capacity) is greater than 600 mAh/g, more preferably 634 mAh/g or more, further preferably 681 mAh/g or more, further preferably 690 mAh/g or more, further preferably greater than 700 mAh/g, further preferably greater than 730 mAh/g, further preferably greater than 745 mAh/g.

[8] The electrode of any one of [1] to [7] above,

wherein the electrode comprises a current collector,
wherein the current collector comprises metal foil, and
wherein $A_S$, D, and T satisfy the following inequality (2), and the right side of the inequality (2) is preferably 25.0, more preferably 26.0, further preferably 27.0, further preferably 28.0, further preferably 28.5, further preferably 29.0, further preferably 29.4, further preferably 30.0, further preferably 30.8, further preferably 35.0, further preferably 36.0,

$$(2) \; A_S \times D/T > 24.0,$$

where T represents a thickness, in $\mu$m, of the metal foil.

[9] The electrode of any one of [1] to [8] above, wherein $DC_{10}$ is greater than 350 mAh/g, preferably greater than 400 mAh/g, more preferably greater than 500 mAh/g, further preferably greater than 600 mAh/g, further preferably 634 mAh/g or more, further preferably greater than 650 mAh/g, further preferably 671 mAh/g or more, further preferably 681 mAh/g or more, further preferably greater than 690 mAh/g, further preferably 723 mAh/g or more, further preferably 743 mAh/g or more, where $DC_{10}$ represents 10th discharge capacity, in mAh/g, in a case where the electrode is used as a positive electrode.

[10] A lithium-ion secondary battery comprising the electrode of any one of [1] to [9] above.

[11] The lithium-ion secondary battery of [10] above,

wherein the lithium-ion secondary battery further comprises an electrolyte, and
wherein $A_S$, D, and V satisfy the following inequality (3), and the right side of the inequality (3) is preferably 250, more preferably 260, further preferably 270, further preferably 280, further preferably 285, further preferably 290, further preferably 294, further preferably 300, further preferably 310, further preferably 350, further preferably 360,

$$(3) \; A_S \times D/V > 240,$$

where V represents a volume, in mL, of the electrolyte.

REFERENCE SIGNS LIST

1. Muffle furnace
2. Heater
3. Lid
4. Inert gas
5. Tray (upper tier)
6. Tray (lower tier)
7. Gas introduction tube
8. Gas discharge tube
9. Sodium hydroxide aqueous solution
10. Trap tank

**Claims**

1. An electrode for lithium-ion secondary battery,

   the electrode comprising an active material layer comprising a particulate active material,
   the active material comprising an organic sulfur compound and an iron compound,
   wherein $A_s$, $A_F$, and D satisfy the following inequality (1),

$$(1)\ A_S \times A_F \times D > 7000,$$

   where $A_s$ represents a sulfur element content, in % by mass, in the active material, $A_F$ represents an iron element content, in % by mass, in the active material, and D represents an application density, in mg/cm$^2$, of the active material.

2. The electrode of claim 1, wherein a value on the right side of the inequality (1) is 8000.

3. The electrode of claim 1, wherein the $A_S$ (sulfur element content in the active material) is greater than 65.0% by mass.

4. The electrode of claim 1 or 3, wherein the $A_F$ (iron element content in the active material) is greater than 15.0% by mass.

5. The electrode of claim 1 or 3, wherein the D (application density of the active material) is greater than 2.5 mg/cm$^2$.

6. The electrode of claim 1 or 3, wherein $DC_3$ is greater than 400 mAh/g, where $DC_3$ represents an initial discharge capacity, in mAh/g, in a case where the electrode is used as a positive electrode.

7. The electrode of claim 6, wherein the $DC_3$ (initial discharge capacity) is greater than 600 mAh/g.

8. The electrode of claim 1 or 3,

   wherein the electrode comprises a current collector,
   wherein the current collector comprises metal foil, and
   wherein $A_S$, D, and T satisfy the following inequality (2),

$$(2)\ A_S \times D / T > 24.0,$$

   where T represents a thickness, in $\mu$m, of the metal foil.

9. The electrode of claim 1 or 3, wherein $DC_{10}$ is greater than 350 mAh/g, where $DC_{10}$ represents 10th discharge capacity, in mAh/g, in a case where the electrode is used as a positive electrode.

10. A lithium-ion secondary battery comprising the electrode of claim 1 or 3.

11. The lithium-ion secondary battery of claim 9,

   wherein the lithium-ion secondary battery further comprises an electrolyte, and
   wherein $A_S$, D, and V satisfy the following inequality (3),

$$(3)\ A_S \times D / V > 240,$$

   where V represents a volume, in mL, of the electrolyte.

# FIG.1

# INTERNATIONAL SEARCH REPORT

| International application No. |
|---|
| **PCT/JP2023/016183** |

**A. CLASSIFICATION OF SUBJECT MATTER**

*H01M 4/13*(2010.01)i; *H01M 4/36*(2006.01)i; *H01M 4/58*(2010.01)i; *H01M 4/60*(2006.01)i; *H01M 4/70*(2006.01)n; *H01M 10/052*(2010.01)n; *H01M 10/058*(2010.01)n

FI: H01M4/13; H01M4/58; H01M4/60; H01M4/36 E; H01M10/058; H01M10/052; H01M4/70 A

According to International Patent Classification (IPC) or to both national classification and IPC

**B. FIELDS SEARCHED**

Minimum documentation searched (classification system followed by classification symbols)

H01M4/13; H01M4/36; H01M4/58; H01M4/60; H01M4/70; H01M10/052; H01M10/058

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2022-530839 A (LG ENERGY SOLUTION, LTD) 01 July 2022 (2022-07-01) | 1-11 |
| A | JP 2021-529418 A (LG CHEM, LTD.) 28 October 2021 (2021-10-28) | 1-11 |
| A | JP 10-505705 A (POLYPLUS BATTERY COMPANY, INC.) 02 June 1998 (1998-06-02) | 1-11 |
| A | JP 2020-205150 A (AIST) 24 December 2020 (2020-12-24) | 1-11 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 June 2023** | **04 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2023/016183**

| Patent document cited in search report | | | Publication date (day/month/year) | Patent family member(s) | | | Publication date (day/month/year) |
|---|---|---|---|---|---|---|---|
| JP | 2022-530839 | A | 01 July 2022 | US | 2022/0223860 | A1 | |
| | | | | WO | 2021/029534 | A1 | |
| | | | | EP | 3954655 | A1 | |
| | | | | KR | 10-2021-0019941 | A | |
| | | | | CN | 113994499 | A | |
| JP | 2021-529418 | A | 28 October 2021 | US | 2021/0288327 | A1 | |
| | | | | WO | 2020/166871 | A1 | |
| | | | | EP | 3809498 | A1 | |
| | | | | KR | 10-2020-0098858 | A | |
| | | | | CN | 112335078 | A | |
| JP | 10-505705 | A | 02 June 1998 | US | 5516598 | A | |
| | | | | WO | 1996/003778 | A2 | |
| | | | | EP | 804811 | A1 | |
| | | | | KR | 10-1997-0705191 | A | |
| | | | | CN | 1159253 | A | |
| JP | 2020-205150 | A | 24 December 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020167144 A
- JP 2017088501 A